(19) **Europäisches Patentamt European Patent Office Office européen des brevets**

(11) **EP 1 855 277 B1**

(12) **EUROPEAN PATENT SPECIFICATION**

(45) Date of publication and mention
of the grant of the patent:
**02.09.2009 Bulletin 2009/36**

(51) Int Cl.:
*G11B 7/26* (2006.01)   *G11B 7/24* (2006.01)
*G11B 7/256* (2006.01)

(21) Application number: **07251935.8**

(22) Date of filing: **10.05.2007**

(54) **Optical recording medium-producing sheet and optical recording medium and methods of producing the same**

Platte zum Herstellen eines optischen Aufzeichnungsmediums, optisches Aufzeichnungsmedium und Herstellungsverfahren dafür

Feuille de production de support d'enregistrement optique et support d'enregistrement optique et procédés de production correspondant

(84) Designated Contracting States:
**DE**

(30) Priority: **11.05.2006   JP 2006132310**

(43) Date of publication of application:
**14.11.2007   Bulletin 2007/46**

(73) Proprietor: **Lintec Corporation**
**Tokyo 173-0001 (JP)**

(72) Inventors:
• **Ito, Masaharu**
**c/o Lintec Corporation**
**Tokyo 173-001 (JP)**
• **Hongo, Yuki**
**c/o Lintec Corporation**
**Tokyo 173-0001 (JP)**
• **Orui, Tomoo**
**c/o Lintec Corporation**
**Tokyo 173-0001 (JP)**

(74) Representative: **Nicholls, Michael John**
**J.A. Kemp & Co.**
**14 South Square**
**Gray's Inn**
**London**
**WC1R 5JJ (GB)**

(56) References cited:
**EP-A- 1 469 466       EP-A- 1 484 377**
**EP-A- 1 505 583       EP-A- 1 548 725**
**EP-A- 1 574 556**

**Description**

BACKGROUND OF THE INVENTION

1. Field of the Invention

The present invention relates to an optical recording medium-producing sheet that can be used to form a protective layer or a stamper-receiving layer of an optical recording medium in the production of the optical recording medium, and a method of producing the optical recording medium-producing sheet, and moreover to an optical recording medium produced using the optical recording medium-producing sheet, and a method of producing the optical recording medium.

2. Description of the Related Art

With a Blu-ray Disc, which is a type of optical recording medium, in general recording and reproduction of data are carried out by irradiating a recording layer with a laser via a protective layer. Here, if the retardation of the protective layer is high, then wavefront aberration occurs, causing a worsening of the signal characteristics. As methods of forming a protective layer having low retardation, there have been reported:

(1) a method in which a low-retardation film substrate having a high thickness precision is superposed onto a recording layer using an adhesive (Japanese Patent No. 3338660, Japanese Patent Application Laid-open No. 2004-62959); and
(2) a method in which a photocurable adhesive film is superposed onto a recording layer (Japanese Patent Application Laid-open No. 2002-25110).

However, with the method of (1), the film substrate is expensive, and moreover there are many steps in the optical recording medium producing method, and hence it is difficult to reduce the cost. Moreover, with the method of (2), runout of the adhesive, deformation and so on thought to be due to the material characteristics are prone to occurring in a punching process, and hence improving the yield is difficult.

EP-1 548 725 (Lintec Corporation) describes an optical disk producing sheet with a stamper-receiving layer that is energy-rays-curable, according to the preamble of claim 1.

SUMMARY OF THE INVENTION

The present invention has been accomplished in view of this state of affairs; it is an object of the present invention to provide an optical recording medium-producing sheet that enables a protective layer or stamper-receiving layer to be formed easily and inexpensively and gives a good yield, and a method of producing the optical recording medium-producing sheet, and moreover an optical recording medium produced using the optical recording medium-producing sheet, and a method of producing the optical recording medium.

To try to attain the above object, firstly, an embodiment of the present invention provides an optical recording medium-producing sheet comprising a substrate, and an energy ray-curable layer laminated on said substrate; ray-curable layer laminated on said substrate;
wherein said energy ray-curable layer is in a semi-cured state, and has an adhesive strength of not less than 10 mN/25mm as measured in accordance with JIS Z0237 using 180° peel adhesion, and wherein said energy ray-curable layer is obtained by semi-curing through irradiation with energy rays a material having as a principal component thereof an energy ray-curable component having a polymerizable double bond therein, a double bond loss ratio for said energy ray-curable component due to the irradiation with the energy rays being from 20 to 90%.

"Optical recording medium" in the present specification means a medium for which recording and reproduction of data can be carried out optically; included under this are mainly read-only, write-once or rewritable disk-shaped media (so-called optical disks (including optical magnetic disks) such as a CD, a CD-ROM, a CD-R, a CD-RW, a DVD, a DVD-ROM, a DVD-R, a DVD-RW, a DVD-RAM, an LD, a Blu-ray Disc, an HD DVD, an MO, or the like), although there is no limitation thereto.

Moreover, "semi-cured" in the present specification means a state between uncured and completely cured, this being a state in which the energy ray-curable layer exhibits adhesive strength such as to be bondable to a recording layer. Furthermore, in the present specification, the "adhesive strength" of the energy ray-curable layer is deemed to represent the value measured in accordance with the test example described later.

According to the above embodiment, a protective layer can be formed easily and inexpensively without using an expensive film substrate as the protective layer, and moreover runout, deformation and so on do not occur upon punching, and hence the yield is good.

Preferably, the energy ray-curable layer is obtained by semi-curing through irradiation with energy rays a material having as a principal component thereof an energy ray-curable component having a polymerizable double bond therein, a double bond loss ratio for the energy ray-curable component due to the irradiation with the energy rays being from 20 to 90%.

In the case of the above features, preferably, the energy ray-curable layer is obtained by semi-curing a material having at least one selected from energy ray-curable monomers/oligomers as a principal component thereof. According to this feature, there is no need to use a solvent when applying on the material, and hence bubbles due to evaporation of such a solvent can be prevented from arising.

Preferably, a surface of the substrate on a side contacting the energy ray-curable layer has a surface roughness (Ra) of not more than 0.1 $\mu$m, or alternatively a substrate is laminated onto each surface of the energy ray-curable layer, and a surface of each substrate on a side contacting the energy ray-curable layer has a surface roughness (Ra) of not more than 0.1 $\mu$m.

The energy ray-curable layer may be for forming a protective layer of an optical recording medium, or may be for forming a stamper-receiving layer.

A second embodiment of the present invention provides a method of producing an optical recording medium-producing sheet, comprising applying a composition having an energy ray-curable component as a principal component thereof onto a substrate, and irradiating a coating layer thus obtained with energy rays so as to semi-cure the energy ray-curable component, thus forming an energy ray-curable layer having an adhesive strength of not less than 10 mN/25mm.

The coating layer may be irradiated with the energy rays after having had another substrate superposed thereon, or such another substrate may be superposed onto the formed energy ray-curable layer.

Preferably, the energy ray-curable component has a polymerizable double bond therein, and from 20 to 90% of the double bonds are lost through the irradiation with the energy rays.

Preferably, the energy ray-curable component has at least one selected from energy ray-curable monomers/oligomers as a principal component thereof.

Preferably, the composition having the energy ray-curable component as a principal component thereof does not contain a solvent.

According to a third aspect of the present invention there is provided a method of producing an optical recording medium, comprising putting into an exposed state one surface of the energy ray-curable layer of an optical recording medium-producing sheet as above, superposing the exposed surface of the energy ray-curable layer onto an optical recording medium recording layer, and irradiating the energy ray-curable layer with energy rays so as to cure the energy ray-curable layer, thus forming a protective layer (invention 14).

A fourth embodiment of the present invention provides a method of producing an optical recording medium, comprising putting into an exposed state one surface of the energy ray-curable layer of the optical recording medium-producing sheet as above, superposing the exposed surface of the energy ray-curable layer onto an optical recording medium recording layer, exposing the other surface of the energy ray-curable layer and pressing a stamper against the exposed surface, and irradiating the energy ray-curable layer with energy rays so as to cure the energy ray-curable layer, and then separating away the stamper, thus forming a stamper-receiving layer having a concavo-convex pattern of the stamper transferred and fixed thereon.

A fifth embodiment of the present invention provides an optical recording medium produced using an optical recording medium-producing sheet as above.

Effects of the Invention

According to the present invention, an optical recording medium protective layer or stamper-receiving layer can be formed easily and inexpensively, and the yield for the manufacture of the optical recording medium-producing sheet or optical recording medium is good.

BRIEF DESCRIPTION OF THE DRAWINGS

FIG. 1 is a sectional view of an optical recording medium-producing sheet according to an embodiment of the present invention;
FIG. 2 consists of sectional views showing an example of a method of producing an optical disk using the optical recording medium-producing sheet according to the above embodiment; and
FIG. 3 consists of sectional views showing another example of a method of producing an optical disk using the optical recording medium-producing sheet according to the above embodiment.

DESCRIPTION OF THE PREFERRED EMBODIMENTS

Following is a description of embodiments of the present invention.

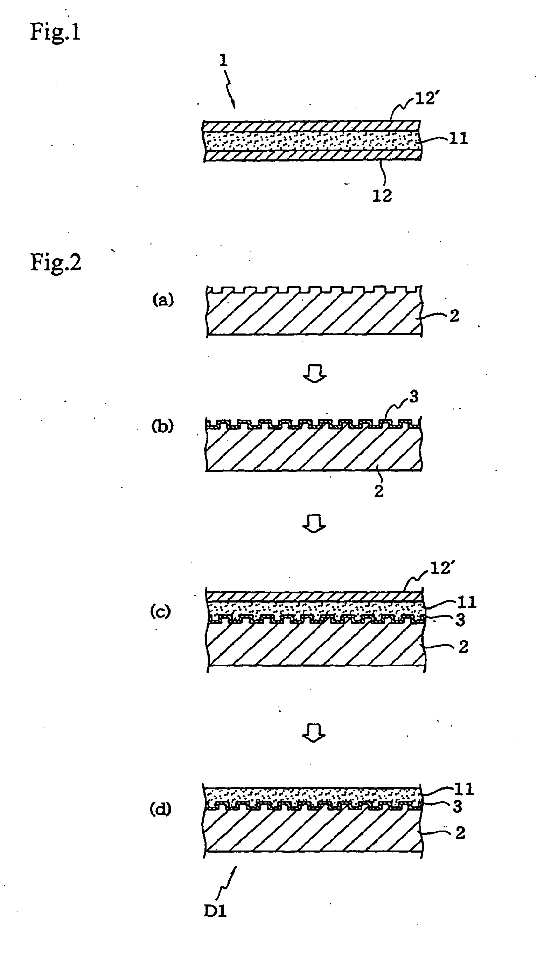

FIG. 1 is a sectional view of an optical disk-producing sheet according to an embodiment of the present invention. The optical disk-producing sheet 1 according to the present embodiment comprises an energy ray-curable layer 11, and substrates 12 and 12' laminated respectively on the two surfaces of the energy ray-curable layer 11. Note, however, that the substrates 12 and 12' are peeled off when using the optical disk-producing sheet 1.

The energy ray-curable layer 11 is a layer that is capable of forming a protective layer that protects a recording layer of an optical disk, or in an optical disk, a stamper-receiving layer onto which a concavo-convex pattern formed on a stamper is transferred so as to form pits or grooves/lands.

The energy ray-curable layer 11 is in a semi-cured state. When the optical disk-producing sheet 1 is punched into an optical disk shape, there is thus no risk of the energy ray-curable layer 11 running out or deformation occurring, and hence a high yield can be maintained.

The energy ray-curable layer 11 can be formed by applying a composition having as a principal component thereof an energy ray-curable component having a polymerizable double bond therein (hereinafter referred to as the "energy ray-curable composition") onto a surface of either the substrate 12 or 12' (for example the substrate 12), and irradiating the coating layer thus obtained with energy rays so as to semi-cure the energy ray-curable composition.

The other substrate (for example the substrate 12') may be superposed onto the coating layer before the irradiation with the energy rays, or may be superposed onto the formed energy ray-curable layer 11 after the irradiation with the energy rays. By superposing on the substrate 12', the surface of the energy ray-curable layer 11 can be prevented from being scratched.

The energy ray-curable component preferably has energy ray-curable monomer(s)/oligomer(s) as the principal component thereof. If a solvent is used when applying on the energy ray-curable composition, then bubbles may form in the energy ray-curable layer 11 due to the solvent evaporating upon drying; however, energy ray-curable monomer (s)/oligomer(s) have low viscosity, and hence a solvent is not required when applying on the energy ray-curable composition having such energy ray-curable monomer(s)/oligomer(s) as the main component thereof, and hence the energy ray-curable layer 11 can be formed with no bubbles therein.

As each of the energy ray-curable monomer(s)/oligomer(s), it is preferable to use an ester of a polyhydric alcohol and (meth)acrylic acid which has a polymerizable double bond therein. Examples of such energy ray-curable monomers/oligomers include monofunctional acrylic esters such as cyclohexyl (meth)acrylate, isobornyl (meth)acrylate and p-cumylphenoxyethyl (meth)acrylate, polyfunctional acrylic esters such as urethane (meth)acrylate, bisphenol A di (meth)acrylate, ethylene oxide-modified bisphenol A di(meth)acrylate, propylene oxide-modified bisphenol A di(meth) acrylate, trimethylolpropane tri(meth)acrylate, pentaerythritol tri(meth)acrylate, pentaerythritol tetra(meth)acrylate, dipentaerythritol hexa(meth)acrylate, 1,4-butanediol di(meth)acrylate, 1,6-hexanediol di(meth)acrylate, polyethylene glycol di(meth)acrylates and dimethylol tricyclodecane di(meth)acrylate, and polyester oligo(meth)acrylates, and polyurethane oligo (meth) acrylates. One such energy ray-curable monomer/oligomer may be used alone, or two or more may be used in combination.

The weight average molecular weight of each energy ray-curable monomer/oligomer is preferably from 70 to 10, 000, particularly preferably from 200 to 5,000.

The energy ray-curable component may also contain an energy ray-curable polymer. As such an energy ray-curable polymer, it is preferable to use a (meth)acrylic ester (co)polymer having energy ray-curable groups introduced on side chains thereof. Such a (meth)acrylic ester (co)polymer can be obtained by reacting together a (meth) acrylic copolymer (a1) having functional group-containing monomer units therein, and an unsaturated group-containing compound (a2) having a substituent that will bond to this functional group.

The (meth)acrylic copolymer (a1) can be obtained by copolymerizing a functional group-containing monomer with a (meth)acrylic ester monomer or a derivative thereof. Examples of the functional group-containing monomer include 2-hydroxyethyl (meth)acrylate, 2-hydroxypropyl (meth)acrylate, 3-hydroxypropyl (meth)acrylate, 4-hydroxybutyl (meth) acrylate, and (meth)acrylic acid, and examples of the (meth)acrylic ester monomer include methyl (meth)acrylate, ethyl (meth)acrylate, propyl (meth) acrylate, n-butyl (meth)acrylate, isobutyl (meth)acrylate, 2-ethylhexyl (meth)acrylate, pentyl (meth)acrylate, hexyl (meth)acrylate, and octyl (meth)acrylate.

Examples of the unsaturated group-containing compound (a2) include 2-methacryloyloxyethyl isocyanate, meta-isopropenyl-$\alpha,\alpha$-dimethylbenzyl isocyanate, methacryloyl isocyanate, allyl isocyanate, and 1,1-(bisacryloyloxymethyl) ethyl isocyanate; acryloyl monoisocyanate compounds obtained by reacting together a diisocyanate compound or a polyisocyanate compound and hydroxyethyl (meth)acrylate; acryloyl monoisocyanate compounds obtained by reacting together a diisocyanate compound or a polyisocyanate compound, a polyol compound, and hydroxyethyl (meth)acrylate; glycidyl (meth)acrylate; and (meth)acrylic acid, 2-(1-aziridinyl)ethyl (meth)acrylate, 2-vinyl-2-oxazoline, and 2-isopropenyl-2-oxazoline.

The weight average molecular weight of the energy ray-curable polymer is preferably from 20,000 to 2,500,000, particularly preferably from 50,000 to 1,000,000.

The content of the energy ray-curable polymer in the energy ray-curable composition is preferably from 0.5 to 60 weight%. Through the energy ray-curable composition containing the energy ray-curable polymer in such a range, even in the case that a relatively thick energy ray-curable layer is formed, it is easy to apply on the energy ray-curable composition to the desired thickness.

In the case of using ultraviolet rays as the energy rays for curing the energy ray-curable layer 11, the energy ray-curable composition preferably contains a photopolymerization initiator; by using such a photopolymerization initiator, the polymerization curing time and the light quantity can be reduced.

Specific examples of such photopolymerization initiators include benzophenone, acetophenone, benzoin, benzoin methyl ether, benzoin ethyl ether, benzoin isopropyl ether, benzoin isobutyl ether, benzoyl benzoic acid, benzoyl methyl benzoate, benzoin dimethyl ketal, 2,4-diethylthioxanthone, 1-hydroxycyclohexyl phenyl ketone, benzyl diphenyl sulfide, tetramethylthiuram monosulfide, azobisisobutyronitrile, benzyl, dibenzyl, diacetyl, β-chloroanthraquinone, (2,4,6-trimethylbenzyl-diphenyl)phosphine oxide, 2-benzothiazole-N,N-diethyldithiocarbamate, oligo{2-hydroxy-2-methyl-1-[4-(1-propenyl)phenyl]propanon e}, and 2,2-dimethoxy-1,2-diphenylethan-1-one. One of these may be used alone, or two or more may be used in combination. Of these, it is preferable to use a photopolymerization initiator having an absorption region the same as the wavelength of the ultraviolet rays irradiated onto the energy ray-curable layer 11.

The photopolymerization initiator is preferably used in an amount in a range of from 0.1 to 10 parts by weight, particularly preferably 0. 5 to 6 parts by weight, per 100 parts by weight of the energy ray-curable monomer(s)/oligomer (s) (in the case of including energy ray-curable polymer(s), per 100 parts by weight of the energy ray-curable monomer (s)/oligomer(s) and the energy ray-curable polymer(s)).

The energy ray-curable composition may contain a non-energy ray-curable polymer. As such a non-energy ray-curable polymer, it is preferable to use, for example, a thermoplastic resin such as an acrylic resin, a polycarbonate, a polyester, or a polyurethane, which are inexpensive and have excellent transparency.

As an acrylic resin, for example one obtained by copolymerizing a functional group-containing monomer with a (meth)acrylic ester monomer or a derivative thereof can be used. Examples of the functional group- containing monomer include 2-hydroxyethyl (meth)acrylate, 2-hydroxypropyl (meth)acrylate, 3-hydroxypropyl (meth)acrylate, 4-hydroxybutyl (meth)acrylate and (meth)acrylic acid. Examples of the (meth)acrylic ester monomer include methyl (meth) acrylate, ethyl (meth) acrylate, propyl (meth) acrylate, n-butyl (meth)acrylate, isobutyl (meth)acrylate, 2-ethylhexyl (meth)acrylate, pentyl (meth)acrylate, hexyl (meth)acrylate, and octyl (meth)acrylate.

The weight average molecular weight of the non-energy ray-curable polymer is preferably from 20,000 to 2,500,000, particularly preferably from 50,000 to 1,000,000.

The content of the non-energy ray-curable polymer in the energy ray-curable composition is preferably from 0.5 to 60 weight%. Through the energy ray-curable composition containing the non-energy ray-curable polymer in such a range, even in the case that a relatively thick energy ray-curable layer is formed, it is easy to apply on the energy ray-curable composition to the desired thickness.

Moreover, in the case that the energy ray-curable composition contains a functional group-possessing polymer, the energy ray-curable composition may contain a crosslinking agent. As the crosslinking agent, there can be used, for example, an isocyanate compound, an epoxy compound, an amine compound, a melamine compound, an aziridine compound, a hydrazine compound, an aldehyde compound, an oxazoline compound, a metal alkoxide compound, a metal chelate compound, a metal salt, an ammonium salt, or a reactive phenol resin.

The content of the crosslinking agent is preferably from 0.01 to 30 parts by weight, particularly preferably from 0.1 to 10 parts by weight, per 100 parts by weight in total of the energy ray-curable polymer and the non-energy ray-curable polymer.

Moreover, the energy ray-curable composition may contain an inorganic filler. Examples of such an inorganic filler include silica, alumina, titanium oxide, zinc oxide, calcium oxide, antimony oxide, tin oxide, germanium oxide, and cerium oxide.

The mean particle diameter of such an inorganic filler is generally from 0.001 to 200 $\mu$m. Moreover, in the case of using such an inorganic filler, the content thereof in the energy ray-curable composition is from 0.1 to 40 weight%.

Furthermore, the energy ray-curable composition may contain an adhesion improving agent for improving the adhesive strength of the energy ray-curable layer 11 to a recording layer of an optical recording medium. As such an adhesion improving agent, it is preferable to use, for example, acrylic acid, methacrylic acid, itaconic acid, or 2-acryloyloxyethylsuccinic acid.

The content of the adhesion improving agent in the energy ray-curable composition is preferably from 0.001 to 10 weight%, particularly preferably from 0.005 to 1 weight%.

Furthermore, the energy ray-curable composition may contain any of various additives. As such an additive, there can be used, for example, a leveling agent for improving the surface smoothness of the energy ray-curable layer 11, an antioxidant; an ultraviolet absorber, a dye, a plasticizer, a thickener, a silane coupling agent, an antistatic agent, or a tackifier. There are no particular limitations on the content of such an additive in the energy ray-curable composition, which may be set as appropriate in a range of from 0 to approximately 30 weight%.

As described above, when applying on the energy ray-curable composition, it is preferable to not use a solvent. As the method of applying on the energy ray-curable composition, it is preferable to use a coater that enables a coating layer of uniform thickness to be formed, for example a knife coater, a roll knife coater, a kiss roll coater, a reverse roll coater, or a die coater. According to such an application method, the energy ray-curable layer 11 can be formed with high thickness precision. Note that if a spin coater is used, then it is difficult to obtain a coating layer of uniform thickness.

To semi-cure the energy ray-curable composition so as to obtain the energy ray-curable layer 11, the above coating layer is irradiated with energy rays. As the energy rays, in general ultraviolet rays, electron rays, or the like are used. There are no particular limitations on the energy ray light quantity so long as the energy ray-curable composition can be semi-cured, but for example, in the case of ultraviolet rays, the light quantity is preferably from 10 to 200 mJ/cm$^2$, particularly preferably from 30 to 100 mJ/cm$^2$.

Here, when semi-curing the energy ray-curable composition, it is preferable to cause from 20 to 90%, particularly preferably from 30 to 80%, of the double bonds in the energy ray-curable component to be lost. If the double bond loss ratio is greater than 90%, then the adhesiveness at the surface of the energy ray-curable layer 11 will decrease, and hence the adhesive strength to a recording layer of an optical disk may decrease. On the other hand, if the double bond loss ratio is less than 20%, then the curing of the energy ray-curable layer 11 will be insufficient, and hence when the optical disk-producing sheet 1 is punched into an optical disk shape, the energy ray-curable layer 11 may run out, or deformation may occur. Moreover, as a result, the thickness precision of the energy ray-curable layer 11 may decrease.

The adhesive strength of the energy ray-curable layer 11 is not less than 10 mN/25mm, preferably from 30 to 10000 mN/25mm, more preferably from 50 to 1000 mN/25mm. Through the adhesive strength of the energy ray-curable layer 11 being not less than 10 mN/25mm, the energy ray-curable layer 11 can be bonded to an optical disk recording layer reliably.

The thickness of the energy ray-curable layer 11 is set as appropriate considering the usage of the energy ray-curable layer 11, generally preferably being from 0.5 to 600 $\mu$m, particularly preferably from 3 to 150 $\mu$m, more preferably from 15 to 120 $\mu$m.

The thickness precision over 1 m$^2$ of the energy ray-curable layer 11 is preferably within $\pm$10%, particularly preferably within $\pm$5%, of the target thickness. If this exceeds $\pm$10%, then the focal point of a laser will be displaced, and hence it may not be possible to read signals normally. Note that this thickness precision is still sufficiently maintained even after the energy ray-curable layer 11 has been further cured by irradiating with energy rays.

The retardation of the energy ray-curable layer 11 after curing (after further irradiating the semi-cured energy ray-curable layer 11 with energy rays) is preferably not more than 20 nm, particularly preferably not more than 15 nm. If the retardation of the energy ray-curable layer 11 is greater than 20 nm, then the signal characteristics for the optical disk obtained may deteriorate.

The transmittance of the energy ray-curable layer 11 after curing (after further irradiating the semi-cured energy ray-curable layer 11 with energy rays) is preferably a spectral transmittance at 405 nm of not less than 80%, particularly preferably not less than 85%. If the spectral transmittance at 405 nm is less than 80%, then the signal characteristics for the optical disk obtained may deteriorate.

The adhesive strength of the energy ray-curable layer 11 after curing (after further irradiating the semi-cured energy ray-curable layer 11 with energy rays) is preferably from 50 to 10000 mN/25mm, particularly preferably from 100 to 5000 mN/25mm. Through the adhesive strength of the energy ray-curable layer 11 after curing being in such a range, an optical disk for which inter-layer peeling is not prone to occur can be obtained.

As each of the substrates 12 and 12', a publicly known one can be used; for example, a film of a resin such as polyethylene terephthalate or polypropylene, or a release film obtained by subjecting such a resin film to release treatment with a silicone release agent, a long chain alkyl release agent, an alkyd resin release agent or the like can be used. Note that in the case that irradiation with ultraviolet rays as the energy rays may be carried out through the substrate 12 or 12', the substrate 12 or 12' should be made of a transparent material.

To make the energy ray-curable layer 11 smooth, the side of each of the substrates 12 and 12' that contacts the energy ray-curable layer 11 preferably has a surface roughness (Ra) of not more than 0.1 $\mu$m, particularly preferably not more than 0.05 $\mu$m. If the surface roughness (Ra) of the substrate 12 or 12' is greater than 0.1 $\mu$m, then the surface roughness of the energy ray-curable layer 11 will increase, and hence the signal characteristics for the optical disk obtained may deteriorate. The thickness of each of the substrates 12 and 12' is generally approximately from 10 to 200 $\mu$m, preferably approximately from 20 to 100 $\mu$m.

It is preferable to make the one of the substrates 12 and 12' that is peeled off from the energy ray-curable layer 11 first be of a light release type, and make the other one of the substrates 12 and 12' that is peeled off afterward be of a heavy release type. Moreover, one of the substrates 12 and 12' may be made to be an untreated resin film, and the other a release film.

Next, a description will be given of an example of a method of producing an optical disk D1 (single-sided one-layer type) using the optical disk-producing sheet 1 described above as a protective layer. FIGS. 2(a) to 2(d) are sectional views showing an example of a method of producing the optical disk D1 using the optical disk-producing sheet 1 described above.

The optical disk-producing sheet 1 is punched into the shape of the optical disk D1 in advance. The punching may be carried out using an ordinary method, for example may be carried out using a punching apparatus or the like. Because the energy ray-curable layer 11 of the optical disk-producing sheet 1 has been semi-cured, there is no risk of the energy ray-curable layer 11 running out or deformation occurring during the punching, and hence a high yield can be maintained.

First, as shown in FIG. 2(a), an optical disk substrate 2 having thereon a concavo-convex pattern comprising grooves and lands is produced. This optical disk substrate 2 is generally made of a polycarbonate, and can be formed using a molding method such as injection molding.

As shown in FIG. 2(b), a recording layer 3 is then formed on the concavo-convex pattern of the optical disk substrate 2. This recording layer 3 is generally constituted from a layer made of an inorganic material or a laminate of such layers, for example a laminate comprising a reflecting layer, a dielectric layer, a phase change layer and a dielectric layer in this order from the bottom. These layers can be formed using means such as sputtering.

Next, as shown in FIG. 2(c), one of the substrates (for example the substrate 12) of the optical disk-producing sheet 1 is peeled off and removed, thus exposing the energy ray-curable layer 11, and then the energy ray-curable layer 11 is press-bonded onto the surface of the recording layer 3 on the optical disk substrate 2.

In this state, the energy ray-curable layer 11 is irradiated with energy rays from the substrate 12' side or the optical disk substrate 2 side using an energy ray irradiating apparatus, thus curing the energy ray-curable layer 11 so as to form a protective layer.

As the energy rays, in general ultraviolet rays, electron rays, or the like are used. The light quantity of the energy ray varies according to the type of the energy rays, but, for example, in the case of ultraviolet rays, the light quantity is preferably approximately from 150 to 3000 mJ/cm$^2$, more preferably from 200 to 1000 mJ/cm$^2$. Moreover, in the case of electron rays, approximately 10 to 1000 krad is preferable.

After the irradiation with the energy rays, as shown in FIG. 2(d), the substrate 12' is peeled off, whereby the optical disk D1 is obtained. Through the optical disk D1 being produced using the above method, the protective layer can be formed easily and inexpensively without using an expensive film substrate as the protective layer, and moreover the yield is good.

In the optical recording medium producing method described above, a single-sided one-layer type optical disk was produced using the optical disk-producing sheet 1, but there is no limitation to this, it also being possible to produce, for example, a single-sided two-layer type optical disk using the optical disk-producing sheet 1.

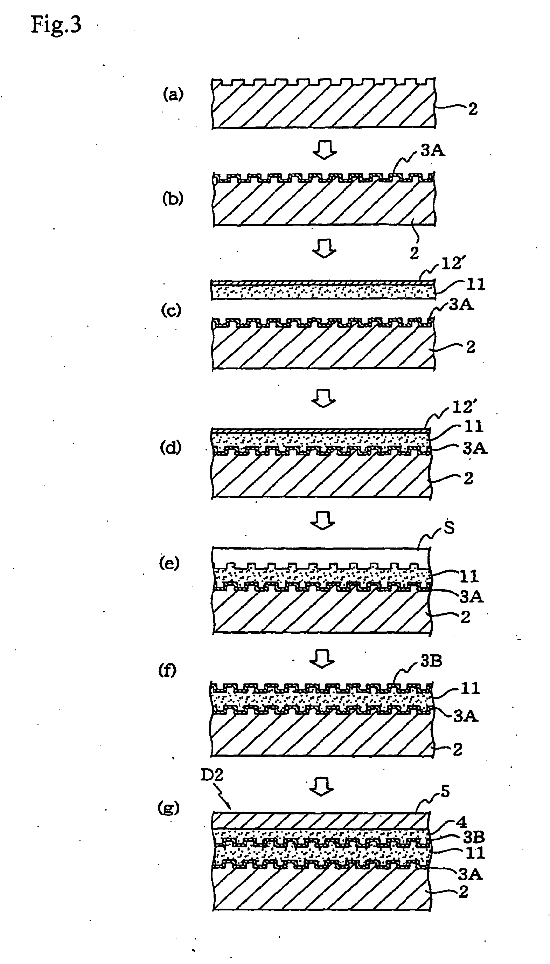

Next, a description will be given of an example of a method of producing an optical disk D2 (single-sided two-layer type) using the optical disk-producing sheet 1 described above as a stamper-receiving layer. FIGS. 3(a) to 3(g) are sectional views showing an example of a method of producing the optical disk D2 using the optical disk-producing sheet 1 described above.

In this case, again the optical disk-producing sheet 1 is punched into the shape of the optical disk D2 in advance. The punching may be carried out using an ordinary method, for example may be carried out using a punching apparatus or the like. Because the energy ray-curable layer 11 of the optical disk-producing sheet 1 has been semi-cured, there is no risk of the energy ray-curable layer 11 running out or deformation occurring during the punching, and hence a high yield can be maintained.

First, as shown in FIGS. 3(a) and 3(b), an optical disk substrate 2 having thereon a concavo-convex pattern comprising grooves and lands is produced, and a first recording layer 3A is formed on the concavo-convex pattern of the optical disk substrate 2. Up to here, the production can be carried out as in the method of producing the optical disk D1 described above.

Next, as shown in FIG. 3(c), the substrate 12 of the optical disk-producing sheet 1 is peeled off and removed, and the thus exposed energy ray-curable layer 11 is made to face the recording layer 3A of the optical disk substrate 2, and then as shown in FIG. 3(d), the energy ray-curable layer 11 is press-bonded onto the surface of the recording layer 3A on the optical disk substrate 2.

Then, after the substrate 12' laminated on the energy ray-curable layer 11 has been peeled off and removed, as shown in FIG. 3(e), a stamper S is pressed against the exposed surface of the energy ray-curable layer 11, thus transferring a concavo-convex pattern of the stamper S onto the energy ray-curable layer 11. In this state, the energy ray-curable layer 11 is irradiated with energy rays from the stamper S side or the optical disk substrate 2 side using an energy ray irradiating apparatus, thus curing the energy ray-curable layer 11.

The stamper S is made of a metallic material such as a nickel alloy or a transparent resin material such as a norbornene resin. Note that the stamper S shown in FIG. 3(e) has a plate-like shape, but there is no limitation thereto, with a roller shape also being possible.

The energy ray-curable layer 11 is cured so that the concavo-convex pattern of the stamper S is transferred and fixed thereon, whereby grooves and lands are formed, and then the stamper S is separated away from the energy ray-curable layer 11. Then, as shown in FIG. 3(f), a second recording layer 3B is formed on the concavo-convex pattern of the energy ray-curable layer 11. This second recording layer 3B is generally constituted from a layer made of an inorganic material or a laminate of such layers, and in particular is often constituted from a laminate comprising a reflecting layer (semi-transparent layer), a dielectric layer, a phase change layer and a dielectric layer in this order from the bottom. Moreover, another dielectric layer may be further formed below the reflecting layer (semi-transparent layer). These layers can be formed using means such as sputtering.

Finally, as shown in FIG. 3(g), a protective sheet 5 is laminated onto the second recording layer 3B via an adhesive 4, whereby the optical disk D2 is obtained. The protective sheet 5 constitutes part of the optical disk D2 such as a light-receiving surface or a label surface of the optical disk; a sheet (film) made of a resin such as a polycarbonate, polymethyl methacrylate or polystyrene can be used. As the adhesive 4, for example an acrylic ultraviolet ray-curable adhesive or the like can be used.

By using the optical disk-producing sheet 1 as described above, the optical disk D2 can be manufactured with good yield.

In the optical recording medium producing method described above, a single-sided two-layer type optical disk was produced using the optical disk-producing sheet 1, but there is no limitation to this, it also being possible to produce, for example, a single-sided one-layer type optical disk using the optical disk-producing sheet 1.

The embodiments described above have been described to aid understanding of the present invention, not to limit the present invention. The various elements disclosed in the embodiments described above are thus deemed to also include all design variations and equivalents falling under the technical scope of the present invention.

For example, the substrate 12 or the substrate 12' of the optical disk-producing sheet 1 may be omitted.

Examples

Following is a more detailed description of the present invention through examples and so on; however, the scope of the present invention is not limited by these examples and so on.

Example 1

50 parts by weight of p-cumylphenoxyethyl acrylate (made by Shin-Nakamura Chemical Corporation, NK Ester ACMP-1E, solid concentration 100 weight%, monofunctional) and 50 parts by weight of ethylene oxide-modified bisphenol A diacrylate (made by Shin-Nakamura Chemical Corporation, NK Ester ABE-300, solid concentration 100 weight%, bifunctional) as an energy ray-curable component, 3 parts by weight of 1-hydroxycyclohexyl phenyl ketone (made by Ciba Specialty Chemicals Inc., Irgacure 184, solid concentration 100 weight%) as a photopolymerization initiator, and 0.1 parts by weight of 2-acryloyloxyethylsuccinic acid (made by Shin-Nakamura Chemical Corporation, NK Ester A-SA, solid concentration 100 weight%) as an adhesion improving agent were mixed together.

The energy ray-curable composition thus obtained was applied using a knife coater onto a transparent polyethylene terephthalate substrate (made by Toray Industries Inc., Lumirror T60, thickness: 50 $\mu$m, surface roughness (Ra) : 0.001 $\mu$m; hereinafter referred to as the "PET substrate") such that the thickness (target thickness) of the energy ray-curable layer (semi-cured state) would be 100 $\mu$m, and a release film (made by LINTEC Corporation, SP-PET3811, thickness: 38 $\mu$m, surface roughness (Ra): 0.029 $\mu$m) was further superposed as another substrate onto the surface of the energy ray-curable layer. Here, the surface roughness (Ra) of each of the substrates was measured using a surface roughness measuring apparatus (made by Mitsutoyo Corporation, SV-3100).

The coating layer was then irradiated from the PET substrate side with ultraviolet rays using an ultraviolet ray irradiating apparatus (made by Eyegraphics Co., Ltd., ECS-401GX, using H04-L41 high-pressure mercury lamp) at an intensity of 250 mW/cm$^2$ and a light quantity of 70 mJ/cm$^2$ to form semi-cured energy ray-curable layer. The laminate obtained in this way was taken as an optical disk-producing sheet. Note that the light quantity was measured using an actinometer (made by Eyegraphics Co., Ltd., UV METER UVPF-36) .

Example 2

An energy ray-curable composition was prepared and an optical disk-producing sheet was produced as in Example 1, except that 50 parts by weight of urethane acrylate (made by Dainippon Ink and Chemicals Inc., Unidic RS24-156, solid concentration 100 weight%, bifunctional) as an energy ray-curable component was further included in the energy ray-curable composition.

Example 3

An energy ray-curable composition was prepared and an optical disk-producing sheet was produced as in Example 1, except that 10 parts by weight of an acrylic resin obtained by copolymerizing 2-ethylhexyl acrylate, isobutyl acrylate, methyl methacrylate, and 2-hydroxyethyl acrylate in a weight ratio of 20:65:10:5 (made by Nippon Synthetic Chemical Industrial Co., Ltd., Coponyl N3085, solid concentration 40 weight%, weight average molecular weight 300,000) as a non-energy ray-curable polymer, and 0.1 parts by weight of an isocyanate crosslinking agent (made by Toyo Ink Manufacturing Co., Ltd., BHS-8515, solid concentration 37.5 weight%) were further included in the energy ray-curable composition.

Comparative Example 1

An optical disk-producing sheet was produced as in Example 1, except that the coating layer applied onto the PET substrate as in Example 1 was irradiated with ultraviolet rays to an energy ray-curable component double bond loss ratio of 92% (intensity 250 mW/cm$^2$, light quantity 250 mJ/cm$^2$), so as to form a substantially completely cured energy ray-curable layer.

Test Examples

(1) Measurement of double bond loss ratio

For the optical disk-producing sheet obtained in each Example or Comparative Example, the energy ray-curable component double bond loss ratio was determined from the percentage reduction in the absorption peak at 810 cm$^{-1}$ at the PET substrate side of the energy ray-curable layer through a diamond ATR method using a Fourier transform infrared spectrometer (made by Perkin Elmer, Spectrum One). Conversion was carried out taking the absorption peak area for an energy ray-curable component not irradiated with energy rays to be 100%, and taking the absorption peak area for an energy ray-curable component irradiated with ultraviolet rays using an ultraviolet ray irradiating apparatus (made by Eyegraphics Co., Ltd., ECS-401GX, using H04-L41 high-pressure mercury lamp) at an intensity of 250 mW/cm$^2$ and a light quantity of 500 mJ/cm$^2$ to be 0%. Here, it was assumed that the absorption peak area is directly proportional to the number of double bonds. The results are shown in Table 1.

(2) Measurement of adhesive strength

(a) Adhesive strength of energy ray-curable layer

The release film of the optical disk-producing sheet obtained in each Example or Comparative Example was peeled off and the energy ray-curable layer was press-bonded onto a test panel (SUS304), and then the 180° peel adhesion was measured as the adhesive strength in accordance with JIS Z0237. The results are shown in Table 1.

(b) Adhesive strength after curing

The release film of the optical disk-producing sheet obtained in each Example or Comparative Example was peeled off and the energy ray-curable layer was press-bonded onto a test panel (SUS304), then irradiation was carried out with ultraviolet rays at an intensity of 250 mW/cm$^2$ and a light quantity of 500 mJ/cm$^2$, and the PET substrate was peeled off and removed, and then the 180° peel adhesion of the cured energy ray-curable layer was measured as the adhesive strength in accordance with JIS Z0237. The results are shown in Table 1.

(3) Measurement of thickness precision

For the optical disk-producing sheet obtained in each Example or Comparative Example, the thickness was measured at 100 points over 1 m$^2$ of the energy ray-curable layer using a digital micrometer (made by Nikon Corporation, MH-15M), and the 1 m$^2$ thickness precision was calculated from the following formula. The results are shown in Table 1.

Thickness precision (%) = {("Thickness at point where difference in thickness to target thickness is greatest" –

(4) Measurement of retardation

The energy ray-curable layer of the optical disk-producing sheet obtained in each Example or Comparative Example was irradiated with ultraviolet rays using an ultraviolet ray irradiating apparatus (made by Eyegraphics Co., Ltd., ECS-401GX, using H04-L41 high-pressure mercury lamp) at an intensity of 250 mW/cm$^2$ and a light quantity of 500 mJ/cm$^2$, and then the PET substrate and the release film were peeled off, and then the retardation was measured using a phase difference measuring apparatus (made by Oji Scientific Instruments, Kobra-WR). The results are shown in Table 1.

(5) Measurement of spectral transmittance at 405 nm

The energy ray-curable layer was irradiated with ultraviolet rays using an ultraviolet ray irradiating apparatus (made by Eyegraphics Co., Ltd., ECS-401GX, using H04-L41 high-pressure mercury lamp) at an intensity of 250 mW/cm$^2$ and a light quantity of 500 mJ/cm$^2$, and then the PET substrate and the release film were peeled off, and then the spectral transmittance at 405 nm was measured using a spectrophotometer (made by Shimadzu Corporation, UV-3100PC). The results are shown in Table 1.

(6) Evaluation of concavo-convex pattern transferability when used as stamper-receiving layer

The optical disk-producing sheet obtained in each Example or Comparative Example had the release film peeled off therefrom and was superposed onto a 2 mm thick polycarbonate plate. Next, the PET substrate was peeled off, and a stamper (pit length: 500 nm, pit depth: 50 nm, made of nickel alloy) was pressed against the energy ray-curable layer using a laminating roller (made by GMP, Excelam 355Q) under conditions of a roller travel speed of 0.94 m/min, a pressure of 0.4 MPa, and a temperature of 50 °C.

In this state, the energy ray-curable layer was cured by being irradiated from the polycarbonate plate side with ultraviolet rays using an ultraviolet ray irradiating apparatus (made by Eyegraphics Co., Ltd., ECS-401GX, using H04-L41 high-pressure mercury lamp) at an intensity of 250 mW/cm$^2$ and a light quantity of 50 mJ/cm$^2$, and then the stamper was separated away.

The surface having the concavo-convex pattern (pits) of the stamper transferred thereon was inspected with a scanning electron microscope (made by Hitachi Ltd., S4700), the case that the transferred pit length was in a range of from 425 to 500 nm being taken as "o". The results are shown in Table 1.

(7) Evaluation of punching suitability

The optical disk-producing sheet obtained in each Example or Comparative Example was punched into a circular shape of diameter 120 mm using a punching apparatus (made by Mark Andy, Mark Andy 910), and it was visually evaluated whether or not there was runout of the energy ray-curable layer at a peripheral edge of the punched sheet. The results are shown in Table 1.

Table 1

| | Double bond loss ratio (%) | Adhesive strength of energy ray-curable layer (a) (mN/25mm) | Adhesive strength after curing (b) (mN/25mm) | Thickness precision (%) |
|---|---|---|---|---|
| Example 1 | 60 | 86 | 190 | -3 |
| Example 2 | 38 | 120 | 340 | -1 |
| Example 3 | 60 | 270 | 740 | 1 |
| Comparative Example 1 | 92 | Less than 10 (sticking not possible) | - | 2 |
| | | | | |

(continued)

|  | Retardation (nm) | Spectral transmittance at 405 nm (%) | Concavo-convex pattern transferability | Punching suitability: Runout |
|---|---|---|---|---|
| Example 1 | 2.8 | 89.7 | o | No |
| Example 2 | 1.7 | 90.1 | o | No |
| Example 3 | 3.0 | 85.0 | o | No |
| Comparative Example 1 | 4.5 | 88.7 | Sticking not possible | Sticking not possible |

As is clear from Table 1, the energy ray-curable layer of the optical recording medium-producing sheet produced in each of the Examples had a double bond loss ratio in a range of from 20 to 90%, and had an adhesive strength, thickness precision, retardation, transmissivity, concavo-convex pattern transferability, and punching suitability suitable for an optical disk protective layer and stamper-receiving layer.

Industrial Applicability

The present invention is useful for producing an optical recording medium easily and inexpensively and with good yield.

**Claims**

1. An optical recording medium-producing sheet (1) comprising a substrate (12), and an energy ray-curable layer (11) laminated on said substrate (12);
**characterized in that** said energy ray-curable layer (11) is in a semi-cured state, and has an adhesive strength of not less than 10 mN/25mm as measured in accordance with JIS Z0237 using 180° peel adhesion, and said energy ray-curable layer (11) is obtained by semi-curing through irradiation with energy rays a material having as a principal component thereof an energy ray-curable component having a polymerizable double bond therein, a double bond loss ratio for said energy ray-curable component due to the irradiation with the energy rays being from 20 to 90%.

2. The optical recording medium-producing sheet (1) according to claim 1, wherein said energy ray-curable layer (11) is obtained by semi-curing a material having at least one selected from energy ray-curable monomers/oligomers as a principal component thereof.

3. The optical recording medium-producing sheet (1) according to claim 1 or 2, wherein a surface of said substrate (12) on a side contacting said energy ray-curable layer has a surface roughness (Ra) of not more than 0.1 $\mu$m.

4. The optical recording medium-producing sheet (1) according to claim 1 or 2, wherein a substrate (12,12') is laminated onto each surface of said energy ray-curable layer (11), and a surface of each said substrate (12, 12') on a side contacting said energy ray-curable layer (11) has a surface roughness (Ra) of not more than 0.1 $\mu$m.

5. The optical recording medium-producing sheet (1) according to any of claims 1 through 4, wherein said energy ray-curable layer (11) is for forming a protective layer of an optical recording medium (D1).

6. The optical recording medium-producing sheet (1) according to any of claims 1 through 4, wherein said energy ray-curable layer (11) is for forming a stamper-receiving layer.

7. A method of producing an optical recording medium-producing sheet (1), comprising:

applying a composition having an energy ray-curable component, which has a polymerisable double bond therein, as a principal component thereof onto a substrate (12), and
irradiating a coating layer thus obtained with energy rays such that from 20 to 90% of said double bonds of the energy ray-curable component are lost, thus forming an energy ray-curable layer (11) in a semi-cured state and having an adhesive strength of not less than 10 mN/25mm as measured in accordance with JIS Z0237 using 180° peel adhesion.

8. The method of producing an optical recording medium-producing sheet (1) according to claim 7, wherein said coating layer (11) is irradiated with the energy rays after having had another substrate (12') superposed thereon.

9. The method of producing an optical recording medium-producing sheet according to claim 7, wherein another substrate (12') is superposed onto the formed said energy ray-curable layer (11).

10. The method of producing an optical recording medium-producing sheet (1) according to any of claims 7 through 9, wherein said energy ray-curable component (11) has at least one selected from energy ray-curable monomers/oligomers as a principal component thereof.

11. The method of producing an optical recording medium-producing sheet (1) according to any of claims 7 through 10, wherein said composition having said energy ray-curable component (11) as a principal component thereof does not contain a solvent.

12. A method of producing an optical recording medium (D1), comprising:

putting, into an exposed state, one surface of said energy ray-curable layer (11) of the optical recording medium-producing sheet (1) according to any of claims 1 through 6;
superposing the exposed surface of said energy ray-curable layer (11) onto an optical recording medium recording layer (3); and
irradiating said energy ray-curable layer (11) with energy rays so as to cure said energy ray-curable layer (11), thus forming a protective layer.

**Patentansprüche**

1. Optisches Aufzeichnungsmedium-produzierendes Blatt (1), aufweisend ein Substrat (12) und eine Energiestrahlen-aushärtbare Schicht (11), die auf das Substrat (12) laminiert ist;
**dadurch gekennzeichnet, dass** die Energiestrahlen-aushärtbare Schicht (11) in einem halb ausgehärteten Zustand ist und eine Klebstärke von nicht weniger als 10 mN/25 mm hat, gemessen in Übereinstimmung mit JIS Z0237 unter Verwendung von 180° Abzugsklebung, und die Energiestrahlen-aushärtbare Schicht (11) ist erhalten, indem ein Material durch Halbaushärten durch Einstrahlen von Energiestrahlen, das als wesentliche Komponente eine Energiestrahlen-aushärtbare Komponente hat, die eine polymerisierbare Doppelbindung darin hat, wobei eine Doppelbindungs-Verlustrate für die Energiestrahlen-aushärtbare Komponente infolge der Einstrahlung der Energiestrahlen von 20 bis 90 % beträgt.

2. Optisches Aufzeichnungsmedium-produzierendes Blatt (1) nach Anspruch 1, wobei die Energiestrahlen-aushärtbare Schicht (11) erhalten wird durch Halbaushärten eines Materials, das als wesentliche Komponente zumindest eine hat, die aus Energiestrahlen-aushärtbaren Monomeren/Oligomeren ausgewählt ist.

3. Optisches Aufzeichnungsmedium-produzierendes Blatt (1) nach Anspruch 1 oder 2, wobei eine Oberfläche des Substrats (12) auf einer Seite, die die Energiestrahlen-aushärtbare Schicht kontaktiert, eine Oberflächenrauigkeit (Ra) von nicht mehr als 0,1 μm hat.

4. Optisches Aufzeichnungsmedium-produzierendes Blatt (1) nach Anspruch 1 oder 2, wobei ein Substrat (12, 12') auf jede Oberfläche der Energiestrahlen-aushärtbaren Schicht (11) laminiert ist und eine Oberfläche von jedem der Substrate (12, 12') auf einer Seite, die die Energiestrahlen-aushärtbare Schicht (11) kontaktiert, eine Oberflächenrauigkeit (Ra) von nicht mehr als 0,1 μm hat.

5. Optisches Aufzeichnungsmedium-prodzierendes Blatt (1) nach einem der Ansprüche 1 bis 4, wobei die Energiestrahlen-aushärtbare Schicht (11) dazu dient, eine Schutzschicht eines optischen Aufzeichnungsmediums (D1) zu bilden.

6. Optisches Aufzeichnungsmedium-produzierendes Blatt (1) nach einem der Ansprüche 1 bis 4, wobei die Energiestrahlen-aushärtbare Schicht (11) dazu dient, eine Stempel-empfangende Schicht zu bilden.

**7.** Verfahren zum Herstellen eines optischen Aufzeichnungsmediumproduzierenden Blatts (1), aufweisend:

- Applizieren einer Zusammensetzung, die eine Energiestrahlen-aushärtbare Komponente hat, die eine polymerisierbare Doppelbindung darin hat, als wesentliche Komponente davon auf einem Substrat (12) und
- Einstrahlen einer Beschichtungsschicht, so erhalten mit Energiestrahlen, so dass von 20 % bis 90 % der Doppelbindungen der Energiestrahlen-aushärtbaren Komponente verloren werden, auf diese Weise eine Energiestrahlen-aushärtbare Schicht (11) bildend in einem halb ausgehärteten Zustand und eine Klebestärke von nicht weniger als 10 mN / 25 mm aufweisend, gemessen entsprechend JIS Z0237 unter Verwendung von 180° Abzugsklebung.

**8.** Verfahren zum Herstellen eines optischen Aufzeichnungsmediumproduzierenden Blatts (1) nach Anspruch 7, wobei die Beschichtungsschicht (11) mit Energiestrahlen bestrahlt wird, nachdem ein anderes Substrat (12') darauf überlagert worden ist.

**9.** Verfahren zum Herstellen eines optischen Aufzeichnungsmediumproduzierenden Blatts (1) nach Anspruch 7, wobei ein anderes Substrat (12') auf die Energiestrahlen-aushärtbare Schicht (11), welche gebildet ist, überlagert wird.

**10.** Verfahren zum Herstellen eines optischen Aufzeichnungsmediumproduzierenden Blatts (1) nach einem der Ansprüche 7 bis 9, wobei die Energiestrahlen-aushärtbare Komponente (11) als wesentliche Komponente zumindest eine ausgewählt aus Energiestrahlen-aushärtbaren Monomeren/Oligomeren hat.

**11.** Verfahren zum Herstellen eines optischen Aufzeichnungsmediumproduzierenden Blatts (1) nach einem der Ansprüche 7 bis 10, wobei die Zusammensetzung, die als wesentliche Komponente die Energiestrahlen-aushärtbare Komponente (11) hat, kein Lösungsmittel enthält.

**12.** Verfahren zum Herstellen eines optischen Aufzeichnungsmediums (D1), aufweisend:

- Anordnen, in einen exponierten Zustand, einer Oberfläche der Energiestrahlen-aushärtbaren Schicht (11) des optischen Aufzeichnungsmedium-prodzierenden Blatts (1) nach einem der Ansprüche 1 bis 6;
- Überlagern der exponierten Oberfläche der Energiestrahlen-aushärtbaren Schicht (11) auf eine ein optisches Aufzeichnungsmedium aufzeichnende Schicht (3); und
- Bestrahlen der Energiestrahlen-aushärtbaren Schicht (11) mit Energiestrahlen, so dass die Energiestrahlen-aushärtbare Schicht (11) ausgehärtet wird, somit Ausbilden einer Schutzschicht.

**Revendications**

**1.** Feuille (1) de formation d'un support d'enregistrement optique, comprenant un substrat (12) et une couche (11) durcissable sous l'effet d'un rayonnement d'énergie, stratifiée sur ledit substrat (12) ;
**caractérisée en ce que** ladite couche (11) durcissable sous l'effet d'un rayonnement d'énergie est à l'état semi-durci et présente une résistance adhésive, déterminée conformément à la norme JIS Z0237 par la valeur d'adhésion au pelage à 180°, qui n'est pas inférieure à 10 mN/25 mm, et l'on produit ladite couche (11) durcissable sous l'effet d'un rayonnement d'énergie en effectuant le semi-durcissement par exposition à un rayonnement d'énergie, d'un matériau ayant pour constituant principal un composé durcissable sous l'effet d'un rayonnement d'énergie, qui contient des doubles liaisons polymérisables et perd de 20 à 90 % de ses doubles liaisons par exposition au rayonnement d'énergie.

**2.** Feuille (1) de formation d'un support d'enregistrement optique conforme à la revendication 1, pour laquelle on produit ladite couche (11) durcissable sous l'effet d'un rayonnement d'énergie en effectuant le semi-durcissement d'un matériau dont le constituant principal est au moins un composé choisi parmi les monomères et oligomères durcissables sous l'effet d'un rayonnement d'énergie.

**3.** Feuille (1) de formation d'un support d'enregistrement optique conforme à la revendication 1 ou 2, pour laquelle la surface dudit substrat (12), sur le côté qui est en contact avec ladite couche durcissable sous l'effet d'un rayonnement d'énergie, présente une rugosité superficielle (Ra) qui n'est pas supérieure à 0,1 $\mu$m.

**4.** Feuille (1) de formation d'un support d'enregistrement optique conforme à la revendication 1 ou 2, pour laquelle un substrat (12, 12') est stratifié sur chaque face de ladite couche (11) durcissable sous l'effet d'un rayonnement d'énergie, et la surface de chacun desdits substrats (12, 12'), sur le côté qui est en contact avec ladite couche (11) durcissable sous l'effet d'un rayonnement d'énergie, présente une rugosité superficielle (Ra) qui n'est pas supérieure à 0,1 μm.

5. Feuille (1) de formation d'un support d'enregistrement optique conforme à l'une quelconque des revendications 1 à 4, pour laquelle ladite couche (11) durcissable sous l'effet d'un rayonnement d'énergie permet de former une couche de protection d'un support d'enregistrement optique (D1).

6. Feuille (1) de formation d'un support d'enregistrement optique conforme à l'une quelconque des revendications 1 à 4, pour laquelle ladite couche (11) durcissable sous l'effet d'un rayonnement d'énergie permet de former une couche de réception de matrice de pressage.

7. Procédé de production d'une feuille (1) de formation d'un support d'enregistrement optique, qui comprend :

l'application sur un substrat (12) d'une composition ayant pour constituant principal un composé durcissable sous l'effet d'un rayonnement d'énergie qui contient des doubles liaisons polymérisables, et l'exposition de la couche de revêtement ainsi obtenue à un rayonnement d'énergie, de manière à ce que le composé durcissable sous l'effet d'un rayonnement d'énergie perde de 20 à 90 % desdites doubles liaisons, en formant ainsi une couche (11) durcissable sous l'effet d'un rayonnement d'énergie, qui se présente à l'état semi-durci et dont la résistance adhésive, déterminée conformément à la norme JIS Z0237 par la valeur d'adhésion au pelage à 180°, n'est pas inférieure à 10 mN/25 mm.

8. Procédé de production d'une feuille (1) de formation d'un support d'enregistrement optique conformément à la revendication 7, dans lequel on expose au rayonnement d'énergie ladite couche (11) de revêtement, après lui avoir superposé un autre substrat (12').

9. Procédé de production d'une feuille (1) de formation d'un support d'enregistrement optique conformément à la revendication 7, dans lequel on superpose un autre substrat (12') à ladite couche (11) durcissable sous l'effet d'un rayonnement d'énergie ainsi produite.

10. Procédé de production d'une feuille (1) de formation d'un support d'enregistrement optique conformément à l'une quelconque des revendications 7 à 9, dans lequel ledit composé (11) durcissable sous l'effet d'un rayonnement d'énergie a pour constituant principal au moins un composé choisi parmi les monomères et oligomères durcissables sous l'effet d'un rayonnement d'énergie.

11. Procédé de production d'une feuille (1) de formation d'un support d'enregistrement optique conformément à l'une quelconque des revendications 7 à 10, dans lequel ladite composition dont le constituant principal est ledit composé (11) durcissable sous l'effet d'un rayonnement d'énergie, ne contient pas de solvant.

12. Procédé de production d'un support d'enregistrement optique (D1), qui comprend les étapes consistant à :

maintenir exposée l'une des surfaces de ladite couche (11) durcissable sous l'effet d'un rayonnement d'énergie, appartenant à la feuille (1) de formation d'un support d'enregistrement optique conforme à l'une quelconque des revendications 1 à 6, appliquer la surface exposée de ladite couche (11) durcissable sous l'effet d'un rayonnement d'énergie, sur une couche (3) d'enregistrement pour support d'enregistrement optique, et exposer à un rayonnement d'énergie ladite couche (11) durcissable sous l'effet d'un rayonnement d'énergie, de manière à faire durcir ladite couche (11) durcissable sous l'effet d'un rayonnement d'énergie, en formant ainsi une couche de protection.

Fig.1

Fig.2

(a)

(b)

(c)

(d)

## Fig.3

(a)

2

⇩

3A

(b)

2

⇩

12'
11

(c)

3A
2

⇩

12'
11
3A

(d)

2

⇩

S

(e)

11
3A
2

⇩

3B

(f)

11
3A
2

⇩

D2

5
4

(g)

3B
11
3A
2

**EP 1 855 277 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3338660 B
- JP 2004062959 A
- JP 2002025110 A
- EP 1548725 A